# EUROPEAN PATENT APPLICATION

(11) **EP 3 859 180 A1**
(43) Date of publication of application: **04.08.2021**
(21) Application number: 19866816.2
(22) Date of filing: 22.03.2019
(51) Int. Cl.: F16D 37/02, F16D 63/00, F16F 9/53

(54) **TORQUE GENERATING DEVICE**

(30) Priority: 25.09.2018 JP 2018179383
(71) Applicant: Alps Alpine Co., Ltd., Tokyo 145-8501 (JP)
(72) Inventor: KUGE, Yoshihiro, Tokyo 145-8501 (JP); TAKAHASHI, Kazunari, Tokyo 145-8501 (JP); TAKAHASHI, Misuzu, Tokyo 145-8501 (JP)
(74) Representative: Schmitt-Nilson Schraud Waibel Wohlfrom Patentanwälte Partnerschaft mbB
(86) International application number: PCT/JP2019/012099
(87) International publication number: WO 2020/066073

(57) **Abstract**

A torque generating device according to the present invention is able to be disassembled while reliably holding a magnetorheological fluid and allows disassembled elements to be reused in accordance with a specification of the device. The torque generating device includes a rotor, a sealing member, a field generator, a controller, and a functional material. The rotor is configured to be able to perform rotation. The sealing member is configured to seal a perimeter of the rotor and form a sealing space. The field generator is disposed outside the sealing member such that the field generator is separable from the sealing member. The field generator is configured to generate an electric field or a magnetic field passing through the sealing space. The controller is configured to control the field generator so as to control a magnitude of the electric field or the magnetic field passing through the sealing space. The functional material is filled in the sealing space such that the functional material is able to flow so as to vary torque for the rotation of the rotor in accordance with the magnitude of the electric field or the magnetic field passing through the sealing space. The sealing member has a support portion configured to support the rotor such that the rotor is able to perform the rotation, and the sealing member is provided such that the sealing member is separable from the field generator.

## Description

### Technical Field

The present invention relates to a torque generating device that can vary rotational resistance by using a magnetorheological fluid or another functional material.

### Background Art

A rotation braking device described in PTL 1 includes a rotation shaft, a disc including a magnetic body, a facing member, a coil, a magnetorheological fluid, and a ball including a non-magnetic body. An end portion of the rotation shaft is connected to a central part of one of surfaces of the disc, and the facing member including a magnetic body faces the other surface of the disc so as to be parallel to the other surface with a small gap interposed between the other surface and the facing member. The coil is disposed concentrically about the axis of the rotation shaft so as to form a magnetic path that penetrates through the small gap when current is applied. The small gap is filled with the magnetorheological fluid. A recessed portion into which the ball is fitted is formed at a central part of the other surface of the disc, the ball is fitted into the recessed portion to a deepest position, and part of the ball projects by a predetermined amount from the other surface of the disc in the axial direction so as to be in contact with a facing surface. Thus, the small gap is formed.

A connection device described in PTL 2 includes a movable shaft formed of a non-magnetic body, a movable member formed of a magnetic body, a magnetorheological fluid, means for generating a magnetic field for applying a magnetic field to the magnetorheological fluid, and a yoke housing formed of a magnetic body. The movable member is connected to the movable shaft and moves integrally with the movable shaft. When a magnetic field is applied to the magnetorheological fluid, the viscosity of the magnetorheological fluid increases compared to that before the application of the magnetic field. Furthermore, a facing portion of the yoke housing facing the movable member with the magnetorheological fluid interposed therebetween has a recessed shape recessed toward the movable member. The yoke housing is fixedly swaged with an electromagnet serving as the means for generating a magnetic field pinched therein, and sealing is provided by a rubber packing between the electromagnet and the yoke housing so as to suppress leakage of the magnetorheological fluid toward the electromagnet.

### Citation List

### Patent Literature

PTL 1: Japanese Unexamined Patent Application Publication No. 2014-181778
PTL 2: Japanese Unexamined Patent Application Publication No. 2017-172655

### Summary of Invention

### Technical Problem

In the rotation braking device according to PTL 1 and the connection device according to PTL 2, the elements are assembled into a single unit. Thus, a region that can be filled with the magnetorheological fluid is formed between the predetermined elements, and the magnetorheological fluid is filled in this region. Here, in a torque generating device with which rotational resistance is varied by using the magnetorheological fluid, the elements are required to be reconfigured in accordance with specifications such as the maximum torque, minimum torque, size, and required power. However, when the elements are disassembled for reconfiguration, in many cases, the number of the elements that can be reused after a specification change is small. Furthermore, when the elements are disassembled, it is difficult to reliably collect the entire magnetorheological fluid filled between the elements. Furthermore, in general, when the production specifications of the torque generating devices are different, the configurations of the components are different. This is disadvantageous in terms of the manufacturing cost and the design cost.

Accordingly, an object of the present invention is to provide a torque generating device that is able to be disassembled while reliably holding a magnetorheological fluid and that allows disassembled elements to be reused in accordance with a specification of the device. Another object of the present invention is to provide a torque generating device that allows a component to be interchangeable even when a production specification is different.

### Solution to Problem

In order to address the above-described problem, a torque generating device according to the present invention includes a rotor, a sealing member, a field generator, a controller, and a functional material. The rotor is configured to be able to perform rotation. The sealing member is configured to seal a perimeter of the rotor and form a sealing space. The field generator is disposed outside the sealing member such that the field generator is separable from the sealing member. The field generator is configured to generate an electric field or a magnetic field passing through the sealing space. The controller is configured to control the field generator so as to control a magnitude of the electric field or the magnetic field passing through the sealing space. The functional material is filled in the sealing space such that the functional material is able to flow so as to vary torque for the rotation of the rotor in accordance with the magnitude of the electric field or the magnetic field passing through the sealing space. The sealing member has a support portion configured to support the rotor such that the rotor is able to perform the rotation, and the sealing member is provided such that the sealing member is separable from the field generator.

Thus, the functional material can be filled in the sealing space without the sealing member being combined with the field generator. Accordingly, the device can be disassembled while reliably holding the functional material and allows disassembled elements to be reused in accordance with the specification of the device.

In the torque generating device according to the present invention, the sealing member preferably includes a plurality of members, and a first sealing member out of the plurality of members preferably forms the support portion.

Thus, the rotor can be reliably held, and the number of the elements can be decreased because the support portion also serves as the first sealing member. Furthermore, productivity can be increased, and functions can be shared between sealing members. Sharing the functions facilitates control of a passage property of a magnetic flux into the sealing space and can realize a configuration for reliably holding the rotor.

In the torque generating device according to the present invention, a second sealing member out of the plurality of members included in the sealing member is preferably positioned between the field generator and the rotor.

Thus, the transmissivity of the magnetic flux into the sealing space can be controlled so as to allow an optimum amount of the magnetic flux to pass to the rotor.

In the torque generating device according to the present invention, the functional material is preferably a magnetorheological fluid, and the field generator is preferably a magnetic field generator configured to generate the magnetic field passing through the magnetorheological fluid.

Thus, a device that has a compact configuration and is easily controlled can be configured.

In the torque generating device according to the present invention, the sealing member is preferably a magnetically transmissive member having a part positioned between the field generator and the rotor, and the part preferably has a magnetic resistance a magnitude of which allows the magnetic field generated by the magnetic field generator to be transmitted into the sealing space. the magnetically transmissive member preferably includes a metal non-magnetic member that allows the magnetic field generated by the magnetic field generator to be transmitted to the magnetorheological fluid.

Thus, the transmissivity of the magnetic flux into the sealing space can be controlled so as to allow the optimum amount of the magnetic flux to pass to the rotor.

In the torque generating device according to the present invention, the magnetic field generator is preferably disposed above the sealing space in a direction in which a central axis of the rotation of the rotor extends.

Thus, the size in the radial direction can be suppressed to a small size.

In the torque generating device according to the present invention, the magnetic field generator is preferably disposed outside the sealing space in a radial direction about a central axis of the rotation of the rotor.

Thus, the size in the direction in which the rotation shaft extends can be suppressed.

In the torque generating device according to the present invention, preferably, an adjuster configured to allow adjustment of a volume of the sealing space is provided. The adjuster is preferably a flexible plate-shaped member included in the sealing member, and the volume of the sealing space is preferably able to be adjusted by deformation of the plate-shaped member. The adjuster is preferably a bellows structure included in the sealing member, and the volume of the sealing space is preferably able to be adjusted by deformation of the bellows structure. The magnetic field generator preferably includes a securing member to be connected to the sealing member, the securing member preferably has a recessed portion, and, the adjuster is preferably able to adjust the volume of the sealing space by using deformation of the sealing member in a space formed with the recessed portion.

Thus, the volume inside the sealing space can be varied in accordance with pressure variation in the sealing space. When the internal pressure of the sealing space increases, the pressure is compensated for by increasing the volume inside the sealing space. When returning the increased internal pressure to the original value, deformation of the adjuster is released so as to return to the original state.

### Advantageous Effects of Invention

According to the present invention, the torque generating device that is able to be disassembled while reliably holding the magnetorheological fluid and that allows the disassembled elements to be reused in accordance with the specification of the device can be provided. Furthermore, due to the configuration in which the sealing member and the field generator are separable from each other, components can be interchangeably used for torque generating devices of different production specifications. Accordingly, cost reduction due to volume production and other effects can be obtained.

### Brief Description of Drawings

[Fig. 1] Fig. 1 is an exploded perspective view illustrating the configuration of a torque generating device according to a first embodiment.
[Fig. 2] Fig. 2 (a) is a sectional view taken along line A-A' illustrated in Fig. 1, and Fig. 2 (b) is a sectional view illustrating an assembled state of the torque generating device illustrated in Fig. 2 (a).
[Fig. 3] Fig. 3 is an enlarged sectional view of part illustrated in Fig. 2 (b).
[Fig. 4] Fig. 4 is a sectional view corresponding to Fig. 2 (a), serving as an explanatory view conceptually illustrating a magnetic path based on a magnetic field generated by an excitation coil.
[Fig. 5] Fig. 5 is a functional block diagram of the torque generating device according to the first embodiment.
[Fig. 6] Fig. 6 (a) is a sectional view illustrating the configuration of the torque generating device according to a second embodiment, and Fig. 6 (b) is a perspective view illustrating the configuration of a cover member according to the second embodiment.
[Fig. 7] Fig. 7 (a) is a sectional view illustrating the configuration of the torque generating device according to a third embodiment, and Fig. 7(b) is an exploded perspective view illustrating the configuration of the torque generating device according to the third embodiment.
[Fig. 8] Fig. 8 is a sectional view illustrating the configuration of the torque generating device according to a fourth embodiment.
[Fig. 9] Fig. 9 is an enlarged sectional view of part illustrated in Fig. 8.

### Description of Embodiments

Hereafter, a torque generating device according to embodiments of the present invention will be described in detail with reference to the drawings.

### <First Embodiment>

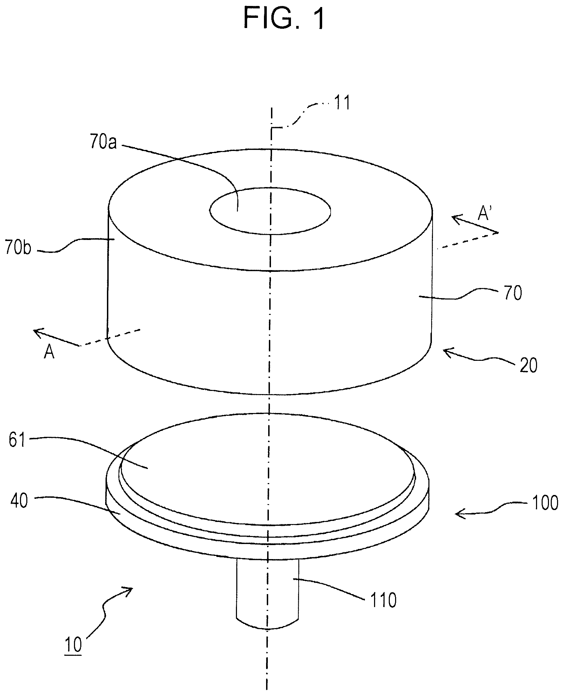

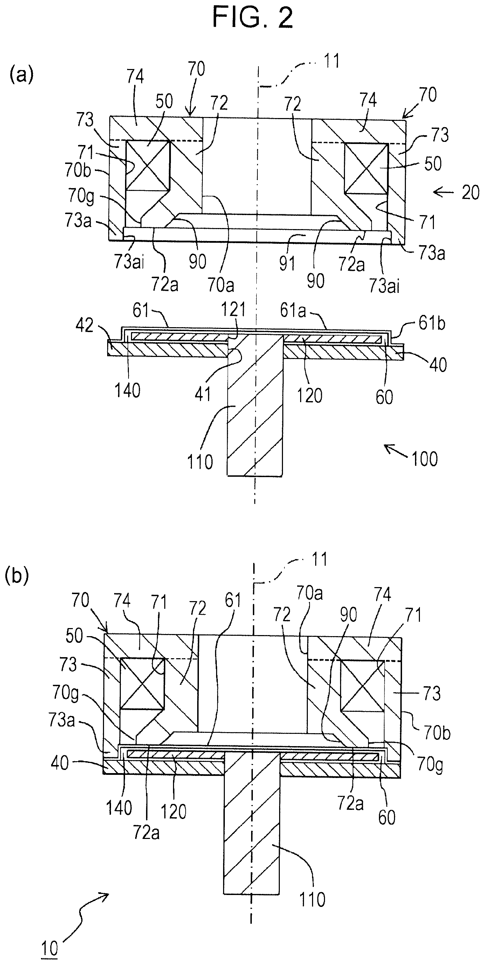

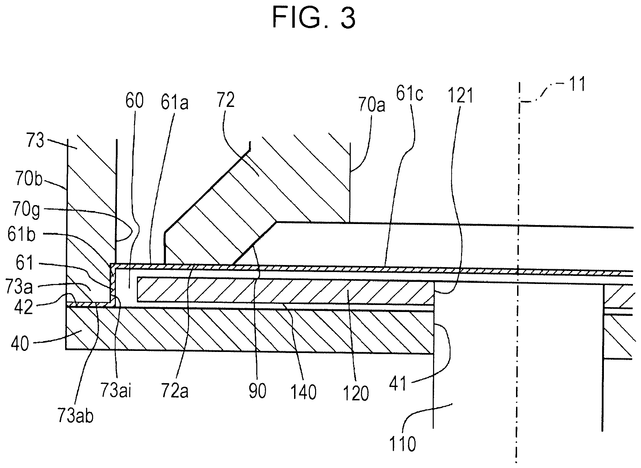

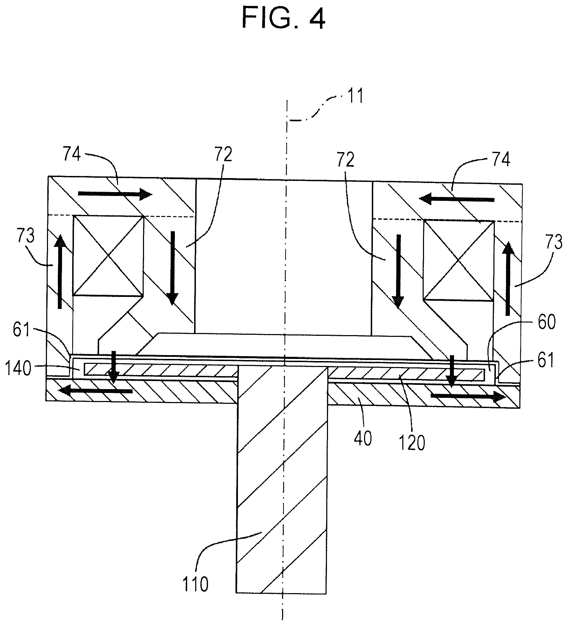

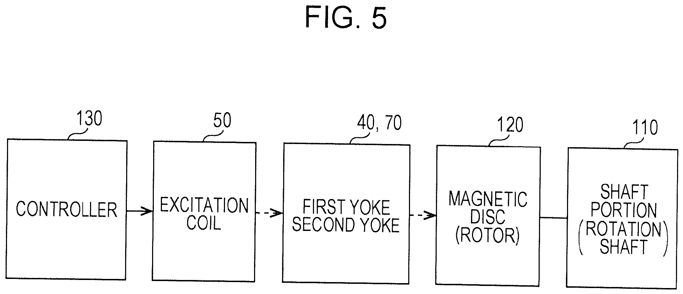

Fig. 1 is an exploded perspective view illustrating the configuration of a torque generating device 10 according to a first embodiment. Fig. 2 (a) is a sectional view taken along line A-A' illustrated in Fig. 1. Fig. 2 (b) is a sectional view illustrating an assembled state of the torque generating device 10 illustrated in Fig. 2 (a). Fig. 3 is an enlarged sectional view of part illustrated in Fig. 2 (b). Fig. 4 is a sectional view corresponding to Fig. 2 (a), serving as an explanatory view conceptually illustrating a magnetic path based on a magnetic field generated by an excitation coil 50. Fig. 5 is a functional block diagram of the torque generating device 10.

In each of the drawings, for convenience of description, the up-down direction is defined along a central axis 11 of a shaft portion 110 (rotation shaft). However, this does not limit directions in actual use. A direction perpendicular to the central axis 11 from the central axis 11 is referred to as a radial direction. In some cases, in the following description, a state seen from above to below along the central axis 11 is referred to as a plan view.

As illustrated in Fig. 1, the torque generating device 10 includes a separation unit 20 and an operation unit 100.

As illustrated in Figs. 2 (a) and 2 (b), the operation unit 100 includes the shaft portion 110 serving as the rotation shaft and a magnetic disc 120 serving as a rotor. The shaft portion 110 and the magnetic disc 120 are connected to the separation unit 20 such that the shaft portion 110 and the magnetic disc 120 are integrally rotatable in both directions about the central axis 11 (Fig. 2 (b)). Furthermore, in the operation unit 100, a sealing space 60 is formed so as to seal the perimeter of the magnetic disc 120. This sealing space 60 is filled with a magnetorheological fluid 140 serving as a functional material such that the magnetorheological fluid 140 can flow.

### <Separation Unit 20>

As illustrated in Figs. 2 (a) and 2 (b), the separation unit 20 includes the excitation coil 50 serving as a magnetic field generator (field generator) and a second yoke 70 serving as a securing member. The separation unit 20 is separable from a sealing member forming the sealing space 60, that is, separable from the sealing member without breaking the sealing member. Thus, the excitation coil 50 and the second yoke 70 included in the separation unit 20 are separable from the sealing member.

The excitation coil 50 is disposed outside the sealing space 60. More specifically, the excitation coil 50 is disposed above the sealing space 60 in the direction in which the central axis 11 extends. The excitation coil 50 is, in an inner space 71 of the second yoke 70, a coil including a conductor that is wound so as to be rotated about the central axis 11. A connection member (not illustrated) is electrically connected to the excitation coil 50. Current is supplied to this connecting member through a path (not illustrated). When the excitation coil 50 is energized, the magnetic field is generated.

As illustrated in Fig. 1, the second yoke 70 is a magnetic material having a hollow cylindrical shape centered at the central axis 11. As illustrated in Figs. 2 (a) and 2 (b), the second yoke 70 includes a cylindrical inner wall portion 72 that forms an inner circumferential surface 70a of the second yoke 70, a cylindrical outer wall portion 73 that forms an outer circumferential surface 70b of the second yoke 70, and a disc-shaped upper wall portion 74. The inner wall portion 72 and the outer wall portion 73 are connected to each other through the upper wall portion 74 positioned above the inner wall portion 72 and the outer wall portion 73. A bottom portion 73a of the outer wall portion 73 projects downward relative to a bottom surface 72a of the inner wall portion 72.

The inner wall portion 72 and the upper wall portion 74 are separately formed yokes. When the upper wall portion 74 is placed on and secured to an upper surface of the inner wall portion 72, the second yoke 70 is formed. The excitation coil 50 is disposed along an outer circumferential surface of the inner wall portion 72 when the upper wall portion 74 is not placed on the inner wall portion 72. After that, when the upper wall portion 74 is placed, the excitation coil 50 is surrounded by the second yoke 70.

The outer wall portion 73 and the upper wall portion 74 may be an integral yoke or separately formed yokes.

The inner space 71 in which the excitation coil 50 is disposed is provided as a space between the inner wall portion 72 and the outer wall portion 73 in the radial direction, and an upper part of the inner space 71 is covered with the upper wall portion 74. Furthermore, in a lower part of the inner space 71, the inner wall portion 72 and the outer wall portion 73 are separated from each other in the radial direction, thereby a gap 70g is formed there between.

Thus, the excitation coil 50 disposed in the inner space 71 is interposed between the inner space 71 and the inner wall portion 72 in the radial direction, and an upper part of the excitation coil 50 is covered with the outer wall portion 73. With the configuration as described above, the magnetic path (magnetic circuit) of the magnetic field generated by the excitation coil 50 can be formed.

In a lower part of the inner wall portion 72, a first opening portion 90 (recessed portion) is formed so as to be coaxially continuous with the inner circumferential surface 70a. An inner diameter of the first opening portion 90 increases as the distance from the inner circumferential surface 70a increases along the central axis 11. In other words, the lower part of the inner wall portion 72 has a shape that extends toward the outer circumference. This limits the area of the bottom surface 72a. When a magnetic flux is concentrated to the bottom surface 72a, the magnetic flux density can be increased.

### <Operation Unit 100>

As illustrated in Figs. 2 (a) and 2 (b), the operation unit 100 includes the shaft portion 110 serving as the rotation shaft, the magnetic disc 120 serving as the rotor, a first yoke 40 serving as a first sealing member, and a cover member 61 serving as a second sealing member.

The shaft portion 110 is a rod-shaped member extending in the up-down direction along the central axis 11. The magnetic disc 120 is coaxially secured to an upper part of the shaft portion 110. The magnetic disc 120 is a disc-shaped member formed of a magnetic material and has a circular flat surface disposed so as to be perpendicular to the up-down direction. The magnetic disc 120 has a hole portion 121 at a center thereof. The hole portion 121 penetrates through the magnetic disc 120 in the up-down direction (thickness direction). The shaft portion 110 is inserted through and secured to this hole portion 121. Thus, the shaft portion 110 and the magnetic disc 120 are integrated with each other and become rotatable about the central axis 11.

The first yoke 40 is a disc-shaped magnetic material having a circular flat surface disposed so as to be perpendicular to the up-down direction. The first yoke 40 is disposed coaxially with the shaft portion 110. The first yoke 40 has a support portion by which the magnetic disc 120 is rotatably supported. As this support portion, a hole portion 41 is provided at a center of the first yoke 40. The hole portion 41 penetrates through the first yoke 40 in the up-down direction (thickness direction). The shaft portion 110 is supported by using a bearing and an O-ring (neither the bearing nor the O-ring is illustrated) disposed in the hole portion 41 such that the shaft portion 110 is rotatable about the central axis 11.

The cover member 61 is disposed on the first yoke 40 so as to surround the magnetic disc 120. The cover member 61 has a circular shape in plan view (see Fig. 1) and is positioned between the excitation coil 50 (magnetic field generator) and the magnetic disc 120 (rotor). Thus, the sealing space 60 is formed by two sealing members, that is, the first yoke 40 serving as the first sealing member disposed below the magnetic disc 120 and the cover member 61 serving as the second sealing member. An entire perimeter of the magnetic disc 120 is sealed by this sealing space 60. Furthermore, with the above-described O-ring, a state in which the sealing space 60 is liquid-tight with respect to the shaft portion 110 is realized.

As illustrated in Fig. 3, the sealing space 60 is filled with the magnetorheological fluid 140 serving as the functional material such that the magnetorheological fluid 140 can flow. The magnetorheological fluid 140 is a substance the viscosity of which varies when a magnetic field is applied. For example, the magnetorheological fluid 140 is a fluid in which particles formed of a magnetic material (magnetic particles) are dispersed in a non-magnetic liquid (solvent). As the magnetic particles contained in the magnetorheological fluid 140, for example, ferrite particles or iron-based particles containing carbon are preferred. For example, the carbon content of the iron-based particles containing carbon is preferably greater than or equal to 0.15%. For example, the diameter of the magnetic particles is preferably greater than or equal to 0.5 µm, and more preferably, greater than or equal to 1 µm. It is desired that the solvent and the magnetic particles of the magnetorheological fluid 140 be selected so as to decrease the likelihood of the occurrences of agglomeration of the magnetic particles or precipitation of the magnetic particles due to the gravity. It is also desired that the magnetorheological fluid 140 contain a coupling material that prevents the precipitation or the agglomeration of the magnetic particles.

Here, the magnetorheological fluid 140 is not necessarily filled in the entire sealing space 60. For example, the magnetorheological fluid 140 may exist only one of an upper surface side and a lower surface side of the magnetic disc 120.

A second opening portion 91 is provided below the first opening portion 90 so as to be coaxially continuous with the first opening portion 90. As illustrated in Fig. 3, an upper position of the second opening portion 91 is defined by the bottom surface 72a of the inner wall portion 72. A radially outer position of the second opening portion 91 is defined by an inner circumferential surface 73ai of the bottom portion 73a of the outer wall portion 73 projecting downward relative to the inner wall portion 72 in the outer wall portion 73. An inner diameter of the second opening portion 91 is set to be greater than the maximum inner diameter of the first opening portion 90. Thus, when the separation unit 20 and the operation unit 100 are combined with each other, an outer part of an upper surface 61a of the cover member 61 (second sealing member) sealing the perimeter of the magnetic disc 120 is brought into contact with the bottom surface 72a of the inner wall portion 72. Furthermore, an outer edge portion 61b of the cover member 61 positioned outside the bottom surface 72a of the inner wall portion 72 is brought into contact with the inner circumferential surface 73ai and a bottom surface 73ab of the bottom portion 73a of the outer wall portion 73. Here, an inside region 61c of the upper surface 61a of the cover member 61 not in contact with the bottom surface 72a of the inner wall portion 72 faces a space of the first opening portion 90.

The cover member 61 serving as the second sealing member is a magnetically transmissive member having a magnetic resistance the magnitude of which allows the magnetic field generated by the excitation coil 50 (magnetic field generator) of the torque generating device 10 to be transmitted into the sealing space 60. Examples of such a cover member 61 include a metal non-magnetic member and a metal material having a small magnetic resistance. For example, as the cover member 61, a ferrite-based or martensite-based stainless steel having a small magnetic resistance or a large magnetic permeability can be selected. When such a cover member 61 is used, the magnetic flux having passed through the magnetic path formed by the second yoke 70 and the first yoke 40 can be transmitted to the magnetic disc 120 and the magnetorheological fluid 140 in the sealing space 60 based on the magnetic field generated by the excitation coil 50.

At least part of the cover member 61 is flexible so as to function as an adjuster that allows adjustment of the volume of the sealing space 60. Furthermore, in the plate-shaped upper surface 61a of the cover member 61, the region 61c disposed further to the inside than a range in contact with the bottom surface 72a of the inner wall portion 72 in the direction perpendicular to the central axis 11 faces the first opening portion 90. This allows, in the cover member 61, projection of at least the above-described region 61c into a space with the first opening portion 90 (recessed portion) in accordance with pressure variation in the magnetorheological fluid 140. Here, the space with the first opening portion 90 includes the space in the first opening portion 90 and a space between the first opening portion 90 and the sealing space 60. Thus, the volume inside the sealing space 60 can be varied in accordance with pressure variation in the sealing space 60. For example, when an internal pressure of the sealing space 60 increases, the pressure is compensated for by increasing the volume inside the sealing space 60. When returning the increased internal pressure to the original value, deformation of the adjuster is released so as to return to the original state.

Here, a range (area in plan view) of the inside region 61c can be set in accordance with a specification of the torque generating device 10, for example, the amount of the pressure variation assumed to occur in the sealing space 60. Furthermore, with the adjustment of the range of the region 61c, the magnetic path of the magnetic field generated by the excitation coil 50 can be arbitrarily set by varying an opening diameter of the first opening portion 90 or the size of the inner wall portion 72 in the radial direction.

In the above-described configuration, when the current is applied to the excitation coil 50, a magnetic field having flows in directions schematically illustrated by arrows in Fig. 4 is formed. When the current is applied in the opposite direction to the excitation coil 50, a magnetic field having flows in directions opposite to the directions illustrated by the arrows in Fig. 4 is formed. In an example illustrated in Fig. 4, the magnetic flux crosses the magnetic disc 120 in the up-down direction from the inner wall portion 72 toward the first yoke 40 of the operation unit 100 along the direction of the central axis 11. In the first yoke 40, this magnetic flux travels in a direction separating from the central axis 11. Here, since the lower part of the inner wall portion 72 has a shape that extends toward the outer circumference, providing the first opening portion 90 limits the area of the bottom surface 72a. This allows concentration, to the bottom surface 72a, of the magnetic flux traveling from the inner wall portion 72 toward the first yoke 40.

The magnetic flux having traveled in the direction separating from the central axis 11 in the first yoke 40 travels upward in the up-down direction along the direction of the central axis 11 in the outer wall portion 73 where an outer edge portion 42 of the first yoke 40 and the bottom portion 73a are in contact with each other, that is, in a region outside the excitation coil 50 and travels in a direction approaching the central axis 11 in the upper wall portion 74. Then, this magnetic flux travels downward in the up-down direction in the inner wall portion 72 corresponding to an inner side of the excitation coil 50 and crosses the magnetic disc 120 again to reach the first yoke 40.

The outer edge portion 42 on a radially outer side in an upper surface of the first yoke 40 is disposed so as to face the bottom surface 73ab of the bottom portion 73a of the outer wall portion 73. The outer edge portion 42 and the outer wall portion 73 are secured to each other with the cover member 61 interposed therebetween. Thus, the outer wall portion 73 and the first yoke 40 are magnetically coupled to each other, and the magnetic path of the magnetic field generated by the excitation coil 50 extends from the separation unit 20 to the operation unit 100 and is formed to have a closed-loop shape.

In the magnetic field of the magnetic path as desired above, since the gap 70g is formed as a ring-shaped opening in the lower part of the inner space 71, passing of the magnetic flux between the inner wall portion 72 and the outer wall portion 73 is regulated. Furthermore, the cover member 61 in contact with the bottom surface 72a of the inner wall portion 72 has, as the magnetically transmissive member, a smaller magnetic resistance than that of the gap 70g. Thus, the magnetic path that passes through the cover member 61 in the up-down direction from the bottom surface 72a of the inner wall portion 72 to reach the inside of the sealing space 60 is reliably provided.

In the magnetic disc 120, the magnetic flux crosses only in the direction along the up-down direction. In the magnetic disc 120, the magnetic flux along the radial direction is not generated or if any, the magnetic flux density thereof is very small. Due to this magnetic field, magnetic lines of force along the radial direction are generated in the first yoke 40, and magnetic lines of force in the direction that is opposite to those of the magnetic lines of force in the magnetic disc 120 and that is along the up-down direction are generated in the outer wall portion 73 of the second yoke 70. Furthermore, magnetic lines of force in the direction that is opposite to the magnetic lines of force in the first yoke 40 and that is along the radial direction are generated in the upper wall portion 74 of the second yoke 70.

In the magnetorheological fluid 140, when the current is applied to the excitation coil 50 to generate the magnetic field, the magnetic field along the up-down direction is given to the magnetorheological fluid 140. Due to this magnetic field, the magnetic particles dispersed in the magnetorheological fluid 140 gather along the magnetic lines of force, and the magnetic particles arranged in the up-down direction are magnetically coupled to each other, thereby forming a cluster. In this state, when a force for rotation of the shaft portion 110 in the direction about the central axis 11 is applied, a shearing force acts on the coupled magnetic particles. Accordingly, a drag force (torque for rotation of the magnetic disc 120) due to these magnetic particles is generated. This allows an operator to feel the drag force compared to a state in which the magnetic field is not generated.

In contrast, when the magnetic field due to the excitation coil 50 is not generated, the magnetic particles are dispersed in the solvent without forming the cluster. Thus, when the operator operates the shaft portion 110, the operation unit 100 rotates relative to the separation unit 20 without receiving a larger drag force.

Since a shape that extends radially outward from the shaft portion 110 to have a disc shape is adopted as the magnetic disc 120, the magnetorheological fluid 140 can be disposed in a larger range than in the case where only the shaft portion 110 is used. The magnitude of the drag force due to the magnetorheological fluid 140 when the magnetic disc 120 is rotated by operating the shaft portion 110 is related to the area of the magnetorheological fluid 140 in a surface perpendicular to the rotation direction of the magnetic disc 120. Thus, as a range in which the magnetorheological fluid 140 is disposed increases, a range of control of the drag force (torque) can be increased.

As illustrated in Fig. 5, the torque generating device 10 includes the above-described excitation coil 50 and a controller 130 electrically connected to the excitation coil 50. The controller 130 controls the current applied to the excitation coil 50, thereby controlling the magnetic flux generated by the excitation coil 50 and the magnetic path for the magnetic flux. Thus, the magnetic flux passing through the magnetorheological fluid 140 and the magnetic disc 120 are controlled. Due to the action of the controlled magnetic flux, the magnetic particles dispersed in the magnetorheological fluid 140 gather along the magnetic lines of force, and the magnetic particles arranged in the up-down direction are magnetically coupled to each other, thereby forming the cluster. In this state, when the force for rotation of the shaft portion 110 in the direction about the central axis 11 is applied, the shearing force acts on the coupled magnetic particles. Since the drag force due to the magnetic particles is generated, the drag force which the operator of the shaft portion 110 feels can be controlled.

The separation unit 20 and the operation unit 100 can be secured to each other by various method such as adhesion, fitting, or screwing. In the torque generating device 10, the sealing space 60 is configured independently of the separation unit 20. Thus, the separation unit 20 and the operation unit 100 can be separated from each other so as to be disassembled while the sealing space 60 is still maintained and the magnetorheological fluid 140 is still held in the sealing space 60. Since the separation unit 20 and the operation unit 100 can be separated as described above, torque generating devices of various configurations can be easily addressed by preparing standardized separation units and operation units. Furthermore, since a manufacturing step can be separated for the separation unit and the operation unit, versatility of constructing of a manufacturing line is improved.

Hereafter, variants are described.

Although the excitation coil 50 (magnetic field generator) serving as the field generator and the magnetorheological fluid 140 serving as the functional material are used according to the above-described first embodiment, the combination of the field generator and the functional material is not limited to this. For example, flowable magnetic powders may be used in the sealing space 60.

Furthermore, an electric field generator that generates an electric field and that can control the electric field may be used as the field generator and an electrorheological fluid may be used as the functional material. In this case, as the sealing member, it is preferable to use an electrically transmissive member having an electrical resistance the magnitude of which allows the electric field generated by the electric field generator of the torque generating device 10 to be transmitted into the sealing space.

Although the sealing space 60 that seals the perimeter of the magnetic disc 120 is formed by two sealing members, that is, the first yoke 40 and the cover member 61 according to the above-described first embodiment, the number, disposition, or the materials of sealing members are not limited to these. Particularly, when the sealing member disposed in the magnetic path is the magnetically transmissive member, the sealing member at another position may be formed of a material having a low magnetic transmissivity, that is, having a large magnetic resistance.

Although the magnetic path is formed by the first yoke 40 and the second yoke 70 according to the above-described first embodiment, yokes that form the magnetic path are not limited to these. For example, the combination of a plurality of yokes included in the second yoke 70 is not limited to the combination of the inner wall portion 72 and the upper wall portion 74 described above.

The flat surface shape of the bottom surface 72a of the inner wall portion 72 can be adjusted as long as the opening area of a lower part of the second opening portion 91 is reliably provided in a range that can address the pressure variation in the sealing space 60. According to the above-described configuration, the magnetic flux density is improved as follows: that is, the first opening portion 90 is provided by extending outward the lower part of the inner wall portion 72 so as to limit the area of the bottom surface 72a to concentrate the magnetic flux. However, the area of the bottom surface 72a may be set to be larger.

### <Second Embodiment>

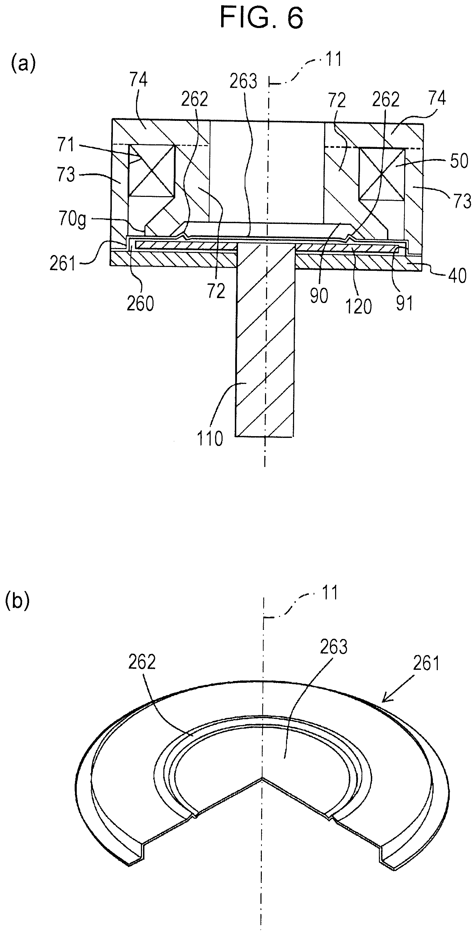

Fig. 6 (a) is a sectional view illustrating the configuration of the torque generating device according to a second embodiment. Fig. 6 (b) is a perspective view illustrating the configuration of a cover member 261 according to the second embodiment. Fig. 6 (a) is a sectional view at a position corresponding to Fig. 2 (a). Fig. 6 (b) is a perspective view when the cover member 261 is seen from above.

According to the second embodiment, instead of the cover member 61 serving as the second sealing member and the adjuster according to the first embodiment, the cover member 261 (the second sealing member and the adjuster) having a bellows portion 262 (bellows structure) is provided. Other configurations are similar to those of the first embodiment, and the same members are denoted by the same reference signs.

As illustrated in Fig. 6 (b), the cover member 261 has a circular shape in plan view and is disposed between the excitation coil 50 (magnetic field generator) and the magnetic disc 120 (rotor). Thus, a sealing space 260 is formed by two sealing members, that is, the first yoke 40 serving as the first sealing member disposed below the magnetic disc 120 and the cover member 261 serving as the second sealing member. The entire perimeter of the magnetic disc 120 is sealed by this sealing space 260. The sealing space 260 is filled with the magnetorheological fluid 140.

The cover member 261 is the magnetically transmissive member having a magnetic resistance the magnitude of which allows the magnetic field generated by the excitation coil 50 (magnetic field generator) of the torque generating device 10 to be transmitted into the sealing space 260. As is the case with the cover member 61 according to the first embodiment, the cover member 261 is preferably formed of a metal material that has a small magnetic resistance.

The cover member 261 includes the bellows portion 262 serving as the adjuster. The bellows portion 262 is provided so as to have an annular shape along the circumferential direction about the central axis 11. In addition, the bellows portion 262 has a bellows structure bent upward and downward along the radial direction about the central axis 11. As illustrated in Fig. 6 (a), in the radial direction, the bellows portion 262 is positioned in a range corresponding to the first opening portion 90. The bellows portion 262 has an elastic force based on the bellows structure thereof and is extendable when the pressure in the sealing space 260 increases. Due to this extension, a region 263 of the cover member 261 surrounded by the bellows portion 262 projects into the first opening portion 90 (recessed portion). This increases the volume inside the sealing space 260. In contrast, when the increased pressure returns to the original value, the extension is released by the elastic force of the bellows portion 262 so as to return to the original state. Thus, the volume inside the sealing space 260 can be varied in accordance with the pressure variation in the sealing space 260. With the configuration including the bellows portion 262, an adjustment amount of the volume inside the sealing space 260 can be increased.

Other actions, effects, and variants are similar to those of the first embodiment.

### <Third Embodiment>

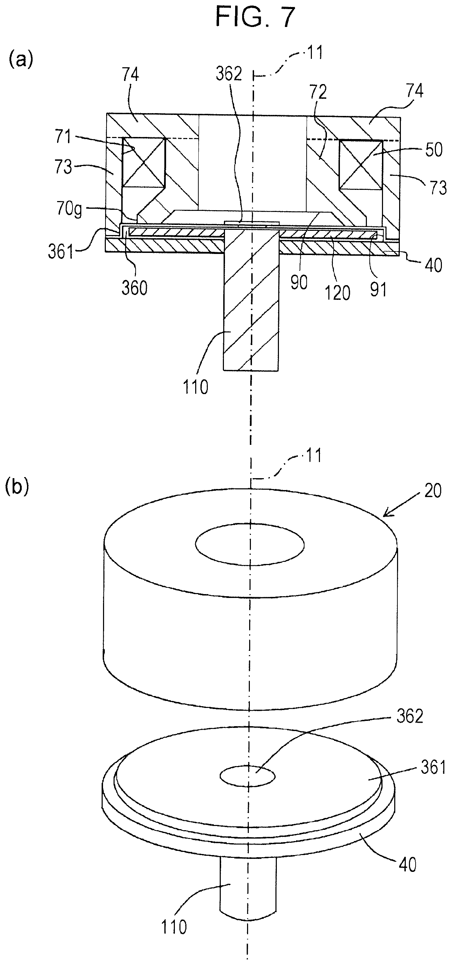

Fig. 7 (a) is a sectional view illustrating the configuration of the torque generating device according to a third embodiment. Fig. 7 (b) is an exploded perspective view illustrating the configuration of the torque generating device according to the third embodiment. Fig. 7 (a) is a sectional view at a position corresponding to Fig. 2 (a). Fig. 7 (b) is a perspective view when a cover member 361 serving as the second sealing member is seen from above.

According to the third embodiment, instead of the cover member 61 serving as the second sealing member and the adjuster according to the first embodiment, the cover member 361 (the second sealing member and the adjuster) having a flexible deformation plate portion 362 is provided. Other configurations are similar to those of the first embodiment, and the same members are denoted by the same reference signs.

As illustrated in Fig. 7 (b), the cover member 361 has a circular shape in plan view and is disposed between the excitation coil 50 (magnetic field generator) and the magnetic disc 120 (rotor). Thus, a sealing space 360 is formed by two sealing members, that is, the first yoke 40 serving as the first sealing member disposed below the magnetic disc 120 and the cover member 361 serving as the second sealing member. The entire perimeter of the magnetic disc 120 is sealed by this sealing space 360. The sealing space 360 is filled with the magnetorheological fluid 140.

The cover member 361 is the magnetically transmissive member having a magnetic resistance the magnitude of which allows the magnetic field generated by the excitation coil 50 (magnetic field generator) of the torque generating device 10 to be transmitted into the sealing space 360. As is the case with the cover member 61 according to the first embodiment, the cover member 361 is preferably formed of a metal material that has a small magnetic resistance.

The cover member 361 includes the deformation plate portion 362 serving as the adjuster. The deformation plate portion 362 is a flexible plate-shaped member provided at a central part of a cover member 361 in the radial direction about the central axis 11. In plan view, the deformation plate portion 362 has a circular shape about the central axis 11 and is positioned in a range corresponding to the first opening portion 90. The deformation plate portion 362 is provided in the cover member 361 by, for example, providing a hole portion at a central portion of the cover member 361 such that the hole portion penetrates through the cover member 361 in the up-down direction and sticking the deformation plate portion 362 on the cover member 361 such that the deformation plate portion 362 closes this hole portion.

When the pressure in the sealing space 360 increases, the deformation plate portion 362 is deformed into the space in the first opening portion 90 (recessed portion) such that the deformation plate portion 362 has an upward convex shape. This increases the volume inside the sealing space 360. In contrast, when the increased pressure returns to the original value, the deformation is released by a restoring force of the deformation plate portion 362 so as to return to the original state. Thus, the volume inside the sealing space 360 can be varied in accordance with the pressure variation in the sealing space 360. Since the area and the thickness of the deformation plate portion 362 can be arbitrarily set, an optimum adjuster adapted to the specification of the torque generating device can be easily realized.

Other actions, effects, and variants are similar to those of the first embodiment.

### <Fourth Embodiment>

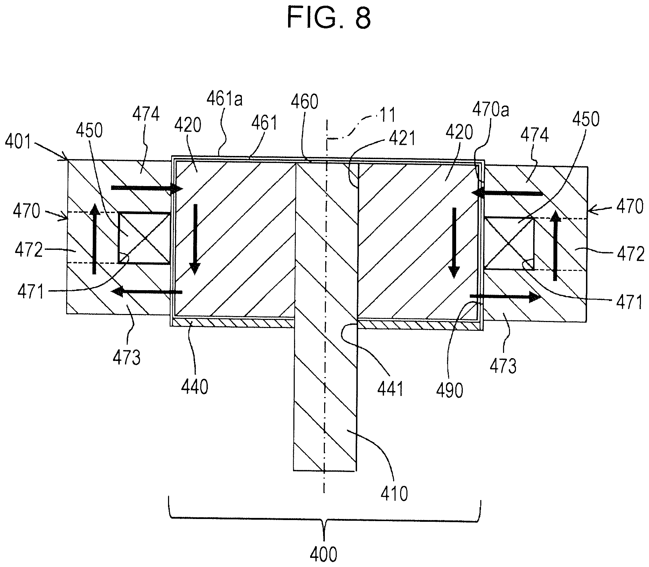

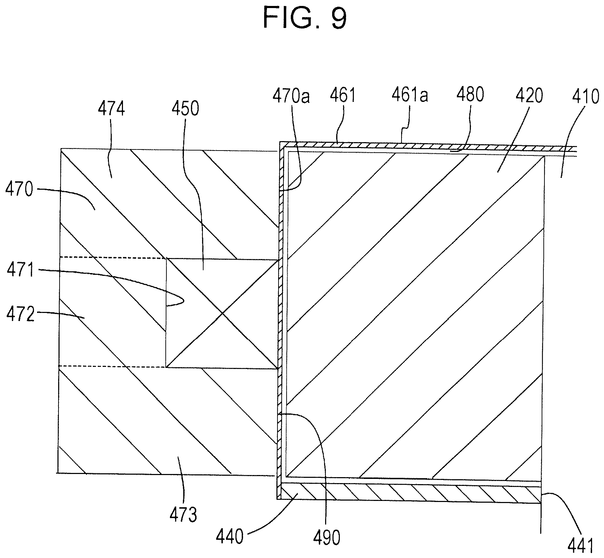

Fig. 8 is a sectional view illustrating the configuration of the torque generating device according to a fourth embodiment. Fig. 9 is an enlarged sectional view of part illustrated in Fig. 8. Fig. 8 is a sectional view at a position corresponding to Fig. 2 (a).

The excitation coil 50 serving as the magnetic field generator is disposed above the sealing space 60 in a direction in which the shaft portion 110 extends (direction in which the central axis 11 extends) according to the first embodiment. However, the position of the magnetic field generator is not limited to this as long as the magnetic field generator is disposed outside the sealing space. As an example, according to the fourth embodiment, an excitation coil 450 serving as the magnetic field generator is disposed outside of a sealing space 460. More specifically, the excitation coil 450 is disposed outside the sealing space 460 in the radial direction about the central axis 11.

Although the magnetic disc 120 is used as the rotor according to the first embodiment, the form of the rotor is not limited to this. For example, a columnar rotor (magnetic column 420) as illustrated for the fourth embodiment may be used.

The torque generating device according to the fourth embodiment includes a separation unit 401 and an operation unit 400.

The separation unit 401 includes the excitation coil 450 serving as the magnetic field generator (field generator) and a second yoke 470 serving as the securing member.

The excitation coil 450 is disposed outside the sealing space 460 in the radial direction about the central axis 11. The excitation coil 450 is, in an inner space 471 of the second yoke 470, a coil including a conductor that is wound so as to be rotated about the central axis 11. A connection member (not illustrated) is electrically connected to the excitation coil 450. Current is supplied to this connecting member through a path (not illustrated). When the excitation coil 450 is energized, the magnetic field is generated.

As illustrated in Fig. 8, the second yoke 470 is a magnetic material having a hollow cylindrical shape centered at the central axis 11. The second yoke 470 has an inner circumferential surface 470a. The operation unit 400 is inserted through the inside of the inner circumferential surface 470a. The second yoke 470 also has a bottom wall portion 473 and an upper wall portion 474 that have disc shapes and a cylindrical outer wall portion 472 interposed between the bottom wall portion 473 and the upper wall portion 474 in the up-down direction. An opening portion 490 surrounded by the inner circumferential surface 470a penetrates through the second yoke 470 in the up-down direction. Furthermore, the second yoke 470 includes the inner space 471 formed so as to be recessed radially outward from the inner circumferential surface 470a at a center in the up-down direction along the direction of the central axis 11.

The outer wall portion 472 and the upper wall portion 474 are separately formed yokes, and when the upper wall portion 474 is placed on and secured to an upper surface of the outer wall portion 472 secured to the bottom wall portion 473, the second yoke 470 is formed. The excitation coil 450 is disposed along an outer circumferential surface of the outer wall portion 472 when the upper wall portion 474 is not placed on the outer wall portion 472. After that, when the upper wall portion 474 is placed, the excitation coil 450 is surrounded by the second yoke 470.

The outer wall portion 472 and the bottom wall portion 473 may be an integral yoke or separately formed yokes.

The excitation coil 450 is disposed in the inner space 471. Thus, the excitation coil 450 is interposed between parts of the second yoke 470 in the up-down direction and also surrounded by the second yoke 470 at an outer side in the radial direction. With the configuration as described above, the magnetic path (magnetic circuit) with which the magnetic field generated by the excitation coil 450 becomes a closed circuit can be formed.

In the above-described configuration, due to control perform by a controller similar to the controller 130 according to the first embodiment, when the current is applied to the excitation coil 450, a magnetic field having flows in directions schematically illustrated by arrows in Fig. 8 is formed. When the current is applied in the opposite direction to the excitation coil 450, a magnetic field having flows in directions opposite to the directions illustrated by the arrows in Fig. 8 is formed. In an example illustrated in Fig. 8, the magnetic flux crosses the magnetic column 420 in the up-down direction along the direction of the central axis 11. In part of the second yoke 470 below the excitation coil 450, this magnetic flux travels in the direction separating from the central axis 11. This magnetic flux travels upward in the up-down direction in part of the second yoke 470 outside the excitation coil 450 and in the direction approaching the central axis 11 in part of the second yoke 470 above the excitation coil 450.

The operation unit 400 includes a shaft portion 410 serving as the rotation shaft, the magnetic column 420 serving as the rotor, a first yoke 440 serving as the first sealing member, and a cover member 461 serving as the second sealing member.

The shaft portion 410 is a rod-shaped member extending in the up-down direction along the central axis 11. The magnetic column 420 is coaxially secured to an upper part of the shaft portion 410. The magnetic column 420 is a disc-shaped member formed of a magnetic material and has a circular flat surface disposed so as to be perpendicular to the up-down direction. The magnetic column 420 has a hole portion 421 at a center thereof. The hole portion 421 penetrates through the magnetic column 420 in the up-down direction (thickness direction). The shaft portion 410 is inserted through and secured to this hole portion 421. Thus, the shaft portion 410 and the magnetic column 420 are integrated with each other and become rotatable about the central axis 11.

The first yoke 440 is a disc-shaped magnetic material having a circular flat surface disposed so as to be perpendicular to the up-down direction. The first yoke 440 is disposed coaxially with the shaft portion 410 below the magnetic column 420 in the up-down direction. The first yoke 440 has a support portion by which the magnetic column 420 is rotatably supported. As this support portion, a hole portion 441 is provided at a center of the first yoke 440. The hole portion 441 penetrates through the first yoke 440 in the up-down direction (thickness direction). The shaft portion 410 is supported by using a bearing and an O-ring (neither the bearing nor the O-ring is illustrated) disposed in the hole portion 441 such that the shaft portion 410 is rotatable about the central axis 11.

The cover member 461 is disposed on the first yoke 440 so as to surround the magnetic column 420. The cover member 461 has a circular shape in plan view and is positioned between the excitation coil 450 (magnetic field generator) and the magnetic column 420 (rotor) in the radial direction. An upper portion 461a of the cover member 461 is exposed to the outside. Thus, the sealing space 460 is formed by two sealing members, that is, the first yoke 440 serving as the first sealing member disposed below the magnetic column 420 and the cover member 461 serving as the second sealing member. The entire perimeter of the magnetic column 420 is sealed by this sealing space 460.

The sealing space 460 is filled with a magnetorheological fluid 480 serving as the functional material such that the magnetorheological fluid 140 can flow. The magnetorheological fluid 480 is similar to the magnetorheological fluid 140 according to the first embodiment.

As is the case with the cover member 61 according to the first embodiment, the cover member 461 as the second sealing member is a magnetically transmissive member having a magnetic resistance the magnitude of which allows the magnetic field generated by the excitation coil 450 (magnetic field generator) of the torque generating device to be transmitted into the sealing space 460. When such a cover member 461 is used, the magnetic flux based on the magnetic field generated by the excitation coil 450 can be transmitted to the magnetic column 420 and the magnetorheological fluid 480 in the sealing space 460.

The cover member 461 is formed of a flexible material so as to function as the adjuster that allows adjustment of the volume of the sealing space 460. Furthermore, since the upper portion 461a of the cover member 461 is exposed to the outside, the upper portion 461a serving as the adjuster can project outward in accordance with the pressure variation in the sealing space 460. Thus, the volume inside the sealing space 460 can be varied in accordance with pressure variation in the sealing space 460. For example, when the internal pressure of the sealing space 460 increases, the pressure is compensated for by increasing the volume inside the sealing space 460. When returning the increased internal pressure to the original value, deformation of the upper portion 461a is released so as to return to the original state.

In the magnetorheological fluid 480, when the current is applied to the excitation coil 450 to generate the magnetic field, the magnetic field is given to the magnetorheological fluid 480. Due to this magnetic field, the magnetic particles dispersed in the magnetorheological fluid 480 gather along the magnetic lines of force, and the magnetic particles having gathered are magnetically coupled to each other, thereby forming a cluster. In this state, when the force for rotation of the shaft portion 410 in the direction about the central axis 11 is applied, the shearing force acts on the coupled magnetic particles. Accordingly, the drag force (torque) due to these magnetic particles is generated. This allows the operator to feel the drag force compared to a state in which the magnetic field is not generated.

In contrast, when the magnetic field due to the excitation coil 450 is not generated, the magnetic particles are dispersed in the solvent without forming the cluster. Thus, when the operator operates the shaft portion 410, the operation unit 400 rotates relative to the separation unit 401 without applying a larger drag force to the operator. When a residual magnetic flux exists in the yoke in a state in which the excitation coil 450 is not energized, resistant torque remains in the shaft portion 410 in accordance with the density of the residual magnetic flux.

As has been described, even when the excitation coil 450 serving as the magnetic field generator is disposed outside the sealing space 460 and the rotor the form of which is other than a disc shape is used, the drag force to be felt by the operator can be controlled.

Although the columnar rotor is used according to the fourth embodiment, for the operation unit in which a disc-shaped rotor similar to that of the first embodiment is used, the excitation coil serving as the magnetic field generator may be disposed outside the operation unit in the radial direction about the central axis 11. In this case, a magnetic field that passes through the disc-shaped rotor in the up-down direction (direction along the central axis 11) can be applied by interposing the disc-shaped rotor with upper and lower yokes.

Other actions, effects, and variants are similar to those of the first embodiment.

Although the present invention has been described with reference to the above-described embodiments, the present invention is not limited to the above-described embodiments. The present invention can be improved or changed within the purpose of improvement or the idea of the present invention.

### Industrial Applicability

As described above, the torque generating device according to the present invention is able to be disassembled while reliably holding the magnetorheological fluid and useful because the disassembled elements can be reused in accordance with the specification of the device. Furthermore, components can be interchangeably used for torque generating devices of different production specifications.

### Reference Signs List

10 torque generating device
11 central axis
20 separation unit
40 first yoke (first sealing member)
41 hole portion (support portion)
42 outer edge portion
50 excitation coil (magnetic field generator (field generator))
60 sealing space
61 cover member (second sealing member, adjuster)
61a upper surface
61b outer edge portion
61c inside region
70 second yoke (securing member)
70a inner circumferential surface
70b outer circumferential surface
70g gap
71 inner space
72 inner wall portion
72a bottom surface
73 outer wall portion
73a bottom portion
73ab bottom surface
73ai inner circumferential surface
74 upper wall portion
90 first opening portion (recessed portion)
91 second opening portion
100 operation unit
110 shaft portion (rotation shaft)
120 magnetic disc (rotor)
121 hole portion
130 controller
140 magnetorheological fluid (functional material)
260 sealing space
261 cover member (second sealing member, adjuster)
262 bellows portion (bellows structure, adjuster)
360 sealing space
361 cover member (second sealing member, adjuster)
362 deformation plate portion (adjuster)
400 operation unit
401 separation unit
410 shaft portion (rotation shaft)
420 magnetic column (rotor)
440 first yoke (first sealing member)
441 hole portion (support portion)
450 excitation coil (magnetic field generator (field generator))
460 sealing space
461 cover member (second sealing member, adjuster)
461a upper portion (adjuster)
470 second yoke (securing member)
470a inner circumferential surface
471 inner space
480 magnetorheological fluid (functional material)
490 opening portion

## Claims

1. A torque generating device comprising:
a rotor configured to be able to perform rotation;
a sealing member configured to seal a perimeter of the rotor and form a sealing space;
a field generator that is disposed outside the sealing member such that the field generator is separable from the sealing member and that is configured to generate an electric field or a magnetic field passing through the sealing space;
a controller configured to control the field generator so as to control a magnitude of the electric field or the magnetic field passing through the sealing space; and
a functional material filled in the sealing space such that the functional material is able to flow so as to vary torque for the rotation of the rotor in accordance with the magnitude of the electric field or the magnetic field passing through the sealing space, wherein
the sealing member has a support portion configured to support the rotor such that the rotor is able to perform the rotation, and wherein
the sealing member is provided such that the sealing member is separable from the field generator.

2. The torque generating device according to Claim 1, wherein
the sealing member includes a plurality of members, and a first sealing member out of the plurality of members has the support portion.

3. The torque generating device according to Claim 2, wherein
a second sealing member out of the plurality of members is positioned between the field generator and the rotor.

4. The torque generating device according to any one of Claims 1 to 3, wherein
the functional material is a magnetorheological fluid, and wherein
the field generator is a magnetic field generator configured to generate the magnetic field passing through the magnetorheological fluid.

5. The torque generating device according to Claim 4, wherein
the sealing member is a magnetically transmissive member having a part positioned between the field generator and the rotor, and the part has a magnetic resistance a magnitude of which allows the magnetic field generated by the magnetic field generator to be transmitted into the sealing space.

6. The torque generating device according to Claim 5, wherein
the magnetically transmissive member includes a metal non-magnetic member that allows the magnetic field generated by the magnetic field generator to be transmitted to the magnetorheological fluid.

7. The torque generating device according to any one of Claims 4 to 6, wherein
the magnetic field generator is disposed above the sealing space in a direction in which a central axis of the rotation of the rotor extends.

8. The torque generating device according to any one of Claims 4 to 6, wherein
the magnetic field generator is disposed outside the sealing space in a radial direction about a central axis of the rotation of the rotor.

9. The torque generating device according to any one of Claims 4 to 8, further comprising:
an adjuster configured to allow adjustment of a volume of the sealing space.

10. The torque generating device according to Claim 9, wherein
the adjuster is a flexible plate-shaped member included in the sealing member, and the volume of the sealing space is able to be adjusted by deformation of the plate-shaped member.

11. The torque generating device according to Claim 9, wherein
the adjuster is a bellows structure included in the sealing member, and the volume of the sealing space is able to be adjusted by deformation of the bellows structure.

12. The torque generating device according to any one of Claims 9 to 11, wherein
the magnetic field generator includes a securing member to be connected to the sealing member,
the securing member has a recessed portion, and
the adjuster is able to adjust the volume of the sealing space by using deformation of the sealing member in a space formed with the recessed portion.
